# EUROPEAN PATENT APPLICATION

(11) **EP 0 728 995 A2**
(43) Date of publication of application: **28.08.1996**
(21) Application number: 96300094.8
(22) Date of filing: 04.01.1996
(51) Int. Cl.: F25D 3/11

(54) **A food freezing apparatus**

(30) Priority: 25.01.1995 GB 9501403
(71) Applicant: The BOC Group plc, Windlesham Surrey GU20 6HJ (GB)
(72) Inventor: King, Brian, Godalming, Surrey, GU7 3EA (GB); Leeson, Richard H., London, SE20 7SW (GB); Lamey, Ross, Sandbach, Cheshire, CW11 9TW (GB)
(74) Representative: Gough, Peter

(57) **Abstract**

A food freezing apparatus (10) comprises immersion and atmospheric freezing zones (22, 24) and a conveyor for passing food to be frozen through both zones. The zones (22, 24) are operable either independently or together and means are provided for optimising the efficiency of the apparatus (10).

## Description

The present invention relates to a food freezing apparatus and relates particularly, but not exclusively, to such apparatus that employ cryogenic fluid in the freezing process.

Presently known food freezing apparatus include what is known as an 'immersion freezer' in which food is frozen by immersing it in a bath of liquid cryogen for a pre-determined period of time, thereby allowing the cold from the liquid cryogen to rapidly penetrate the food and cause it to be frozen. Such apparatus often include a conveyor belt which passes through the liquid cryogen and upon which the food is transported. Whilst immersion freezing provides a very rapid freezing process, it is, by its very nature, difficult to control the degree of freezing and it is possible to over rapidly chill some foods thereby causing damage thereto and wasting valuable liquid cryogen.

An alternative form of food freezing apparatus includes an 'atmospheric freezer'. In such freezers, food to be frozen is exposed to a gaseous atmosphere comprising cryogen gas such as nitrogen which acts to chill the food at a rate much slower than would be achieved by immersion freezing. Such a freezing process is inherently very much more controllable than immersion freezing and is particularly well suited to use with delicate food items. However, due to the requirement for a comparatively long residence time, atmospheric freezing does not lend itself for use in freezing large quantities of food.

It is an object of the present invention to provide a food freezing apparatus which reduces and possibly eliminates the above mentioned problems.

Accordingly, the present invention provides a food freezing apparatus comprising a tunnel having an inlet and an outlet, a conveyor for conveying food to be frozen from said inlet to said outlet in which said tunnel includes, in flow series, an immersion freezing zone and an atmospheric freezing zone and said conveyor passes through both zones so as to facilitate immersion and/or atmospheric freezing of food as and when desired.

Advantageously, the apparatus includes a fan for causing gaseous cryogen created by boil off of liquid cryogen in said immersion zone to be directed towards said atmospheric freezing zone so as to chill any food passing therethrough.

Conveniently, the apparatus further includes temperature sensing means for sensing the temperature within the tunnel and for causing operation of said fan to maintain a pre-selected temperature.

Preferably, said thermocouple is positioned adjacent the inlet and causes operation of said fan to maintain temperature to a pre-selected low value.

Advantageously, the apparatus further includes atomising means for atomising cryogenic liquid in said atmospheric freezing zone thereby to at least partially create the chilling atmosphere therein.

Preferably, the atomising means comprises atomising spray bars situated above the conveyor.

Advantageously, the apparatus includes baffle means for restricting the flow of cryogenic gas from the tunnel.

Conveniently, the conveyor comprises a continuous belt and said baffle means comprises a plurality of vertically aligned baffles positioned above, between and below the continuous belt and in which the above baffle terminates a pre-determined distance from said conveyor so as to facilitate the passage of food thereunder.

The apparatus may include liquid cryogen level control means.

Advantageously, the apparatus includes turbulence generating means for causing cryogenic atmosphere within the atmospheric freezing zone to be caused to flow in a turbulent manner around any food passing therethrough.

Preferably, the apparatus further includes a selector switch for facilitating said apparatus to be operated either with or without immersion freezing.

In a particularly advantageous arrangement the conveyor comprises two conveyor belts, the first of which takes food through the immersion freezing zone and the second of which takes the food through the atmospheric freezing zone.

The conveyor belts may be independently driven and may be operated at different speeds with the second belt being driven at a speed greater than that of the first belt.

The present invention will now be more particularly described by way of example only with reference to the accompanying drawings, in which:
Figure 1 is a cross-sectional view of a first arrangement of the present invention;
Figure 2 is a cross-sectional view of a second arrangement of the present invention; and
Figure 3 is a cross-sectional view of an alternative form of the present invention illustrating a "drop in" feed system.

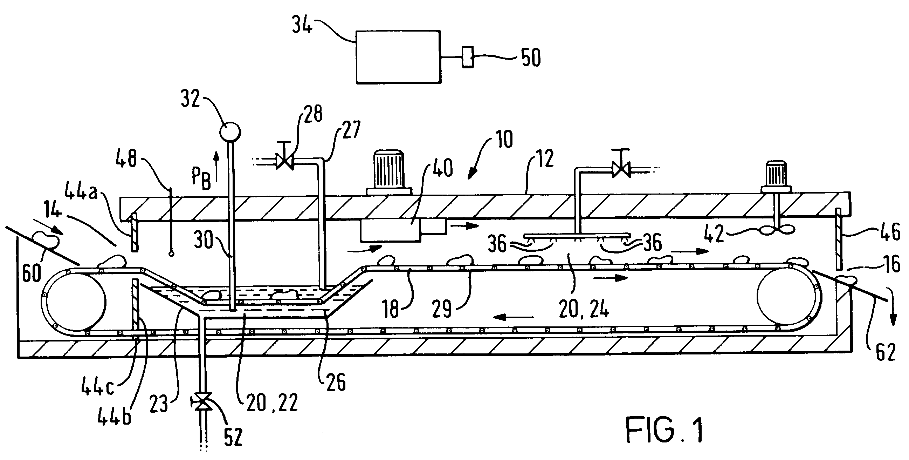

Referring to Figure 1, a food freezing apparatus 10 comprises a tunnel 12 having an inlet 14 and an outlet 16, a conveyor 18 for conveying food to be frozen through the tunnel 12 and freezing means 20 in the form of an immersion freezer zone 22 and an atmospheric freezer zone 24. The immersion freezer zone 22 comprises an immersion pan 23 which, in operation is partially filled with liquid cryogen 26 supplied through pipe 27 and valve 28. The conveyor 18 comprises an endless belt 29 which over part of its length is dipped into the pan 23. The level of liquid cryogen is controlled by, for example, bubble control in which bubbles are blown into the liquid cryogen 26 through pipe 30 and the back pressure P_{B} monitored by pressure monitor 32. Pressure monitor 32 is connected to a controller 34 so as to transmit a signal thereto to position the supply valve 28 to maintain pressure corresponding to the desired liquid level. The controller 34 is configured (in a manner well known to those skilled in the art and therefore not described further herein) to open and close valve 28 as and when required so as to maintain a desired liquid level.

The atmospheric freezer zone 24 comprises either the total length or at the latter end of tunnel 12 and a plurality of atomising nozzles 36 for atomising liquid cryogen so as to create a cryogenic gas through which the conveyor 18 passes. Any food passing through the cryogenic gas will be further frozen but at a rate somewhat slower than that experienced during immersion freezing. A fan 40 acts to cause gaseous cryogen produced as 'boil-off' from the liquid cryogen in the immersion zone 22 to be drawn therefrom and directed along the atmospheric freezing zone 24 so as to assist, or possibly replace, the freezing effect created by nozzles 36. A turbulence generating means in the form of one or a plurality of fans situated along the roof between fan 40 and the outlet end of the tunnel fan 42 acts to cause the flow of gas to become turbulent thereby increasing the cooling effect in a manner well known to those skilled in the art. Baffles 44, 46 are provided at the inlet 14 and outlet 16 for reducing the loss of cryogenic gas to the atmosphere. Such baffles may include a plurality of vertically aligned baffles positioned above, between and below the continuous belt 29 as shown at 44a, b and c respectively. Also included in the tunnel is a temperature sensor such as for example thermocouple 48 positioned towards the inlet 14. This sensor is connected via controller 34 to fan 40 so as to cause said fan to operate upon detection of a pre-determined temperature. In practice, the system is configured to initiate operation of fan 40 upon detection of a pre-determined low temperature, thereby causing 'boil off' gas to be withdrawn from above the immersion zone as and when it is sufficiently cool as to induce further useful cooling in the atmospheric freezing zone 24. A selector switch, shown schematically at 50 is provided for facilitating operation of the apparatus 10 either with or without immersion freezing. Valve 52 is provided for draining pan 23 as and when immersion freezing is deselected.

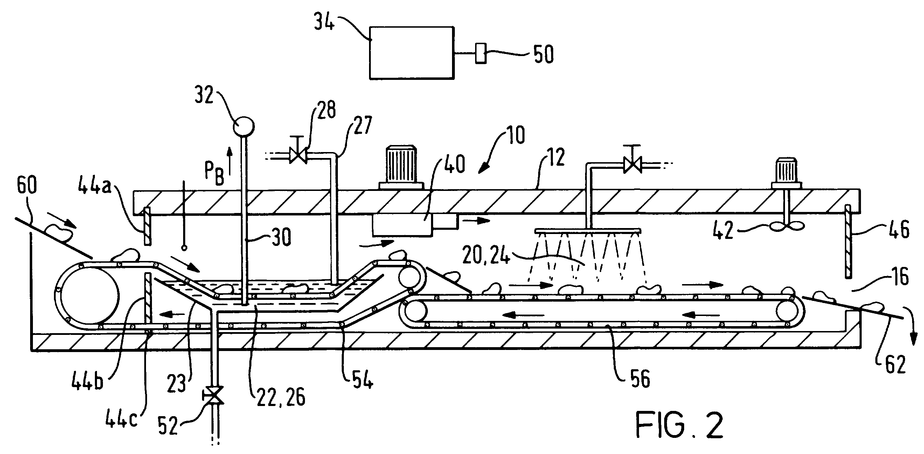

A double conveyor arrangement is illustrated in Figure 2. A first belt 54 acts to take the food from the inlet and passes it through the immersion freezer zone 22 before depositing it on a second belt 56 which transports the food through the atmospheric freezing zone 24. Clearly, with such an arrangement it will be possible to vary the speed of transportation through the two zones. For instance, the first conveyor could be operated at a fairly fast speed, thereby causing rapid freezing of the outer crust of any food whilst the second belt could be operated at a somewhat slower speed thereby facilitating a more gradual and less damaging freezing of the interior of the food items.

In operation, food is passed into tunnel 12 via slide 60 and deposited on conveyor 18. The conveyor first passes the food through the pan 23 containing liquid cryogen 26 (when provided) and then onto atmospheric freezing zone 24 before it is extracted from the tunnel 12 via slide 62 and deposited in a food bin or tray (not shown) for later packing operations. Both tunnels (Figure 1 and Figure 2) may be operated without immersion freezing as and when desired and the speed of the conveyor belt or belts may be varied independently to suit the particular food being frozen.

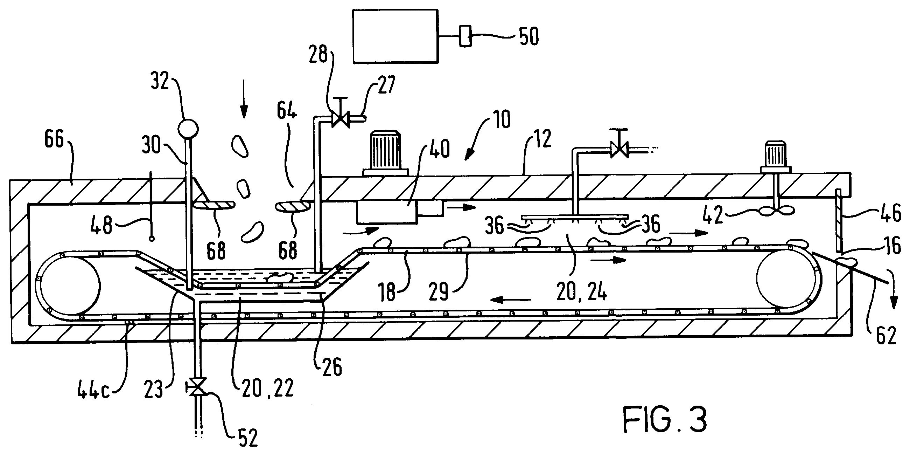

Operation of the Figure 3 embodiment is substantially the same as described above save for the fact that food items are dropped into the liquid cryogen through an opening 64 provided in the roof 66 of the apparatus 10. The opening 64 may be restricted by deformable members 68 or may be left entirely open. This upper feed arrangement has the advantage of allowing a simple any yet efficient feeding operation whilst minimising the loss of cryogenic gas. Said gas being heavier than natural air tends to sink to the bottom of the apparatus rather than escape through the opening 64.

## Claims

1. A food freezing apparatus (10) characterised by a tunnel (12) having an inlet (14) and an outlet (16), a conveyor (18) for conveying food to be frozen from said inlet (14) to said outlet (16) in which said tunnel includes, in flow series, an immersion freezing zone (22) and an atmospheric freezing zone (24) and said conveyor (18) passes through both zones so as to facilitate immersion and/or atmospheric freezing of food as and when desired.

2. A food freezing apparatus (10) as claimed in Claim 1 characterised by a fan (40) for causing gaseous cryogen created by boil off of liquid cryogen in said immersion zone (22) to be directed towards said atmospheric freezing zone (24) so as to chill any food passing therethrough.

3. A food freezing apparatus (10) as claimed in Claim 2 characterised by temperature sensing means (48) for sensing the temperature within the tunnel and for causing operation of said fan (40) to maintain a pre-selected temperature.

4. A food freezing apparatus (10) as claimed in Claim 3 characterised in that said temperature sending means (48) comprises a thermocouple which is positioned adjacent the inlet and causes operation of said fan (40) when the temperature drops to a pre-selected low value.

5. A food freezing apparatus (10) as claimed in any one of Claims 1 to 4 characterised by atomising means (36) for atomising cryogenic liquid in said atmospheric freezing zone (24) thereby to at least partially create the chilling atmosphere therein.

6. A food freezing apparatus (10) as claimed in Claim 5 characterised in that said atomising means (36) comprises atomising spray bars situated above the conveyor (18).

7. A food freezing apparatus (10) as claimed in any one of Claims 1 to 6 characterised by baffle means (44, 46) for restricting the flow of cryogenic gas from the tunnel.

8. A food freezing apparatus (10) as claimed in Claim 7 characterised in that the conveyor (18) comprises a continuous belt and said baffle means comprises a plurality of vertically aligned baffles (44a, b, c) positioned above, between and below the continuous belt (18) and in which the above baffle terminates a pre-determined distance from said conveyor so as to facilitate the passage of food thereunder.

9. A food freezing apparatus (10) as claimed in any one of Claims 1 to 8 characterised by liquid cryogen level control means (34).

10. A food freezing apparatus (10) as claimed in any one of Claims 1 to 9 characterised by turbulence generating means (42) for causing cryogenic atmosphere within the atmospheric freezing zone (24) to be caused to flow in a turbulent manner around any food passing therethrough.

11. A food freezing apparatus (10) as claimed in any one of Claims 1 to 10 including a selector switch (50) for facilitating said apparatus to be operated either with or without immersion freezing.

12. A food freezing apparatus (10) as claimed in any one of Claims 1 to 11 characterised in that said conveyor (18) comprises two conveyor belts (54, 56), the first of which takes food through the immersion freezing zone (22) and the second of which takes the food through the atmospheric freezing zone (24).

13. A food freezing apparatus (10) as claimed in Claim 12 characterised in that said first and second conveyor belts (54, 56) are independently driven.

14. A food freezing apparatus as claimed in Claim 12 or 13 characterised in that said second conveyor belt (56) is driven at a speed greater than that of said first conveyor belt.
